(19) Europäisches Patentamt
European Patent Office
Office européen des brevets

(11) **EP 1 985 748 B1**

(12) **EUROPEAN PATENT SPECIFICATION**

(45) Date of publication and mention
of the grant of the patent:
**26.10.2011 Bulletin 2011/43**

(21) Application number: **07708182.6**

(22) Date of filing: **07.02.2007**

(51) Int Cl.:
*D07B 1/06* (2006.01)   *B60C 9/00* (2006.01)
*B60C 9/20* (2006.01)   *B60C 9/22* (2006.01)
*D07B 7/02* (2006.01)

(86) International application number:
**PCT/JP2007/052150**

(87) International publication number:
**WO 2007/094222 (23.08.2007 Gazette 2007/34)**

(54) **Tire comprising a steel cord for the reinforcement of the crown portion**

Reifen mit einem Stahlkord für oberseitige Reifenarmierung

Pneumatique avec un câble d'acier pour armature de sommet

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **15.02.2006   JP 2006037822**

(43) Date of publication of application:
**29.10.2008   Bulletin 2008/44**

(73) Proprietor: **Bridgestone Corporation
Tokyo 104-0031 (JP)**

(72) Inventor: **IKEHARA, Kiyoshi
Kodaira-shi
Tokyo 187-0031 (JP)**

(74) Representative: **Whalley, Kevin
Marks & Clerk LLP
90 Long Acre
London WC2E 9RA (GB)**

(56) References cited:
**JP-A- 2 104 785      JP-A- 05 186 976
JP-A- 08 134 786      JP-A- 10 096 181
US-A- 3 996 020**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to steel cords and rubber-steel cord composites (which will simply be referred to as "cords" and "composites", respectively, hereinafter) for tires.

Background Art

Steel cords are variously used for reinforcing composites by being embedded in matrices of, for example, rubber. In particular, although rubber itself in a rubber product lacks strength and rigidity, a rubber-steel cord composite in which the rubber is reinforced by a steel cord can have sufficient strength and rigidity. For this reason, rubber-steel cord composites are widely used in varicus rubber products, such as tires, belts, and hoses.

Normally, a product containing such a composite is manufactured through a molding process performed while the matrix is in a fluid or flexible state. However, in this process, because the steel cord to be used for reinforcement is rigid, the flexibility at the time of the molding process is often limited. For this reason, in a conventional steel cord, increasing the strength and rigidity of the product and achieving flexibility during the manufacturing process conflict with each other.

Since tires are circular and are thus mostly occupied by curved surfaces, flexibility is especially required in the manufacturing process therefor. Specifically, in a vulcanization process, a tire is normally expanded inside an oven so that the tire can be fit into a mold. On the other hand, after the tire is made into a product, it is important that the tire have high strength and rigidity as well as dimensional stability so that it can withstand heavy-duty use over a long period of time and exhibit stable performance. In particular, a crown portion of a tire when in use constantly receives tensile force in the circumferential direction thereof due to the internal pressure. As the tire is used, the tensile force can cause the crown portion to creep and to become longer in the circumferential direction, thus reducing the durability as a result of strain as well as changing the cross-sectional shape of the tire to deteriorate the abrasion characteristics.

In contrast, Patent Document 1, for example, discloses a technology for reinforcing the crown portion of a tire. Specifically, a tread portion around a carcass includes two layers of crossover belts and at least one crown reinforcement layer positioned therebelow, the crown reinforcement layer being formed of strips of reinforcement elements that are wholly oriented along the equator, the reinforcement elements being multiple cords (or filaments) forming a corrugated or zigzag pattern. Accordingly, this technology can effectively prevent the occurrence of separations without increasing the weight of the tire.

Furthermore, it is also disclosed in Patent Document 1 that the use of strips of corrugated or zigzag patterned cords or filaments wholly oriented along the equator as a crown reinforcement layer facilitates the manufacturing process since expansion at the time of vulcanization can be readily attained.

Patent Document 1: Japanese Unexamined Patent Application Publication No. H2-208101 (Claims, etc.)

Disclosure of Invention

Problems to be Solved by the Invention

However, with the technology disclosed in Patent Document 1, in order for the steel cord to exhibit sufficient rigidity after the tire becomes a product, the corrugated or zigzag pattern needs to be stretched and substantially straightened in a state where internal pressure is applied to the product. Therefore, in order to allow the physical properties of the tire as a product to be in accord with a target value, high accuracy is required in the moulding process, which is problematic in terms of production efficiency.

A steel cord for reinforcing elastomeric material is described in US3996020.

An object of the present invention is to provide a tire having a crown portion having a reinforcement layer comprising a steel cord.

Means for solving the Problems

In order to solve the aforementioned problems, the present invention provides a tire comprising a reinforcement layer that includes, as a reinforcement member, a rubber-steel cord composite formed by embedding in rubber a steel cord having a multiple-twist structure and having a diameter D in mm of a circle circumscribing the cord, including N strands that are twisted together with a twisting pitch P of the cord in mm, wherein N may be any integer not less than 2 and not more than 8; each strand having a plurality of wires that are twisted together and each strand having a diameter d in mm, wherein the steel cord satisfies the following relation:

$$\varepsilon_C \geq 0.005$$

wherein $\varepsilon_C$ is defined by the following expression:

$$\varepsilon_C = \sqrt{(-b/2 + \sqrt{(b^2/4 - c)})} - 1$$

with

$$b = -1 + \pi^2(-4R^2 + d^2)/P^2 ,$$

$$c = \pi^2 d^2 k(4\pi^2 R^2 + P^2)/P^4,$$

$$R = (D-d)/2,$$

and

$$k = \tan^2(\pi/2 - \pi/N),$$

wherein the reinforcement layer is formed by wrapping the reinforcement member around a crown portion of the tire by at least one turn.

Preferably, $\varepsilon_C \geq 0.015$ is satisfied.

Preferably, the N strands have a gap in at least one section therebetween.

Preferably, the tire according to the present invention includes at least a pair of carcasses serving as a framework and extending in a toroidal form between at least a pair of bead cores, and at least one layer of belt extending around an outer periphery of the carcasses and having a plurality of cords or filaments serving as reinforcement elements that form a slanted angle of 10˚ to 40˚ with respect to an equatorial plan of the tire,

The tire being provided with at least one crown reinforcement layer formed on an inner periphery side of the belt which is the outer periphery of the carcasses, the at least one crown reinforcement layer being formed of strips of the rubber-steel cord composite as defined above that are wholly oriented in a circumferential direction of the tire.

Another tire according to the present invention Preferably includes at least a pair of carcasses serving as a framework and extending in a toroidal form between at least a pair of bead cores, and at least two layers of crossover belts extending around an outer periphery of the carcasses and having a plurality of cords or filaments serving as reinforcement elements that form a slanted angle of 10˚ to 40˚ with respect to an equatorial plane of the tire and that cross over each other between the at least two layers with the equatorial plane therebetween, the

tire being provided with at least one crown reinforcement layer formed on an inner periphery side of the crossover belts which is the outer periphery of the carcasses, the at least one crown reinforcement layer being formed of strips of the rubber-steel cord composite as defined above that are wholly oriented in a circumferential direction of the tire.

Brief Description of Drawings

Fig. 1 is a cross-sectional view showing an example of a steel cord for reinforcing a crown portion of a tire according to the present invention.

Fig. 2 is an enlarged cross-sectional view of a =read portion in an example of a tire according to the present invention.

Fig. 3 includes part (a) showing an enlarged cross-sectional view of a tread portion of a tire in comparative examples, and part (b) showing a schematic plan view of a rubber-steel cord composite according to the comparative examples.

Fig. 4 is a graph that shows the relationship between strain and stress with regard to rubber-steel cord composites of a comparative example and an embodiment.

Reference Numerals

1 wire
2 strand
10 tire
11 carcass
12 crossover belt
13 crown reinforcement layer

Best Modes for Carrying Out the Invention

Preferred embodiments of the present invention will be described below.

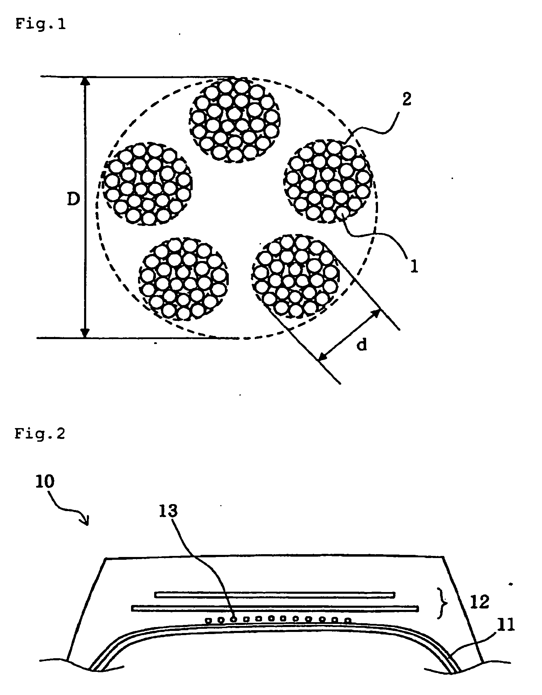

Fig. 1 is a cross-sectional view showing an example of a steel cord for reinforcing a crown portion of a tire according to the present invention. As shown in the figure, the steel cord has a multiple-twist structure including N (N = 2 to 8) strands 2 that are twisted together, i.e. 5 strands 2 twisted together in the example shown in the figure, each strand 2 having a plurality of wires 1 that are twisted together, preferably, 5 to 49 wires 1 twisted together. When the diameter of each strand is denoted by d (mm) , the diameter of a circle circumscribing the cord is denoted by D (mm), and the twisting pitch of the cord is denoted by P (mm), $\varepsilon_c$ defined by the following expression

$$\varepsilon_c = \sqrt{(-b/2 + \sqrt{(b^2/4 - c)})} - 1$$

(where b denotes $-1+\pi^2(-4R^2+d^2)/P^2$, c denotes $\pi^2 d^2 k (4\pi^2 R^2+P^2)/P^4$, R denotes (D-d)/2, and k denotes $\tan^2(\pi/2-\pi/N)$) satisfies $\varepsilon_c \geq 0.005$.

With $\varepsilon_c$ defined by the above expression satisfying $\varepsilon_c \geq 0.005$, or preferably $\varepsilon_c \geq 0.015$, the N strands 2 in the steel cord can have a gap (or gaps) above a certain size formed in at least one section therebetween or all of the strands 2 in the example shown in the figure can have gaps above a certain size formed therebetween; hence, even when this cord is embedded within a matrix of, for example, rubber, the gap or gaps would be present between the strands 2. Therefore, when the matrix is in a flexible state, the cord can readily be stretched to withstand a certain degree of strain with respect to tensile strain applied to the cord. Accordingly, the molding process for the product becomes easier, and the time for expansion at the time of vulcanization during a tire manufacturing process can be extended, thereby achieving an advantage of an easier manufacturing process.

On the other hand, when the fluidity of the matrix decreases as in vulcanized rubber, as described above, even if the strands 2 have the gap or gaps therebetween, the steel cord favorably becomes incapable of being deformed like a coil spring with reducible gap or gaps. Thus, the rigidity of steel becomes exhibited as if there were no gaps Consequently, when the steel cord according to the present invention becomes a product, the tensile rigidity thereof becomes less susceptible to the magnitude of strain applied to the steel cord during processing, and the steel cord constantly becomes highly rigid. Although it is preferable in terms of fatigability that there be a gap or gaps remaining between the strands when the cord is in the product state, the cord according to the present invention as described above will not decrease significantly in tensile rigidity even in such a state as compared to the case where the strands 2 are closely in contact with each other.

Accordingly, the present invention can provide a steel cord that allows for good production efficiency and that can exhibit sufficient rigidity to serve as a reinforcement member after a tire becomes a product, and a rubber-steel cord composite formed by embedding this steel cord in rubber.

A tire according to the present invention is of a type that is equipped with a reinforcement layer that employs the rubber-steel cord composite as defined above as a reinforcement member. Consequently, the reinforcement layer can exhibit desired high rigidity, whereby a tire with excellent durability and abrasion resistance properties can be achieved. The present invention is especially effective when applied to truck and bus radial (TBR) tires, which are used under high internal pressure and whose crown portion receives high tension in the circumferential direction. The reinforcement layer equipped in the tire according to the present invention is preferably formed by wrapping the reinforcement member made of the aforementioned rubber-steel cord composite around the crown portion of the tire by at least one turn.

Fig. 2 is an enlarged cross-sectional view of a tread portion in an example of a tire according to the present invention employing the rubber-steel cord composite as reinforcement members. A tire 10 shown in the figure has at least a pair of carcasses 11 serving as a framework and extending in a toroidal form between at least a pair of bead cores (not shown), at least two layers of crossover belts 12 extending around the outer periphery of the carcasses 11

and having a plurality of cords or filaments serving as reinforcement elements that form a slanted angle of 10° to 40° with respect to a plane including the central circumference of the tire, that is, the equatorial plane of the tire and that cross over each other between the at least two layers with the equatorial plane therebetween, and at least one crown reinforcement layer 13 disposed on the inner periphery side of the crossover belts 12, that is, the outer periphery of the carcasses 11 and formed of strips of the aforementioned rubber-steel cord composite that are wholly oriented in the circumferential direction of the tire.

Although the advantages of the present invention are not limited to the example shown in the figures and are achievable with respect to any kind of tire, the present invention is especially effective in a TBR tire as mentioned above. In particular, by applying the composite according to the present invention to the crown reinforcement layer 13 as shown in Fig. 2, the expansion at the time of vulcanization can be readily attained, thereby facilitating the manufacturing process. In addition, fluctuation in the physical properties of the product can be reduced with respect to fluctuation in expansion at the time of vulcanization, whereby stable quality can be advantageously assured.

Alternatively, although not shown in the figures, the crossover belts 12 in the tire may be replaced with at least one layer of a belt that has a plurality of cords or filaments serving as reinforcement elements that form a slanted angle of 10° to 40° with respect to the equatorial plane of the tire. In such a tire, the inner periphery side of the belt, that is, the outer periphery of the carcasses may be provided with the crown reinforcement layer 13 in which the composite according to the present invention is used as reinforcement members. In this manner, it is needless to say that the same advantages as described above can be achieved.

The tire according to the present invention is of a type in which the aforementioned rubber-steel cord composite as defined above is employed in a reinforcement layer, specifically, as reinforcement members in the crown reinforcement layer, and with this structure, the desired advantages of the present invention can be achieved. The specific structures and materials of the tire as well as the specific cord diameter, twisting pitch, and the number of reinforcement members to be embedded in the reinforcement layer are not particularly limited and may be appropriately set as in the usual manner.

Embodiments

Embodiments of the present invention will be described below in further detail.

(Comparative Example 1)

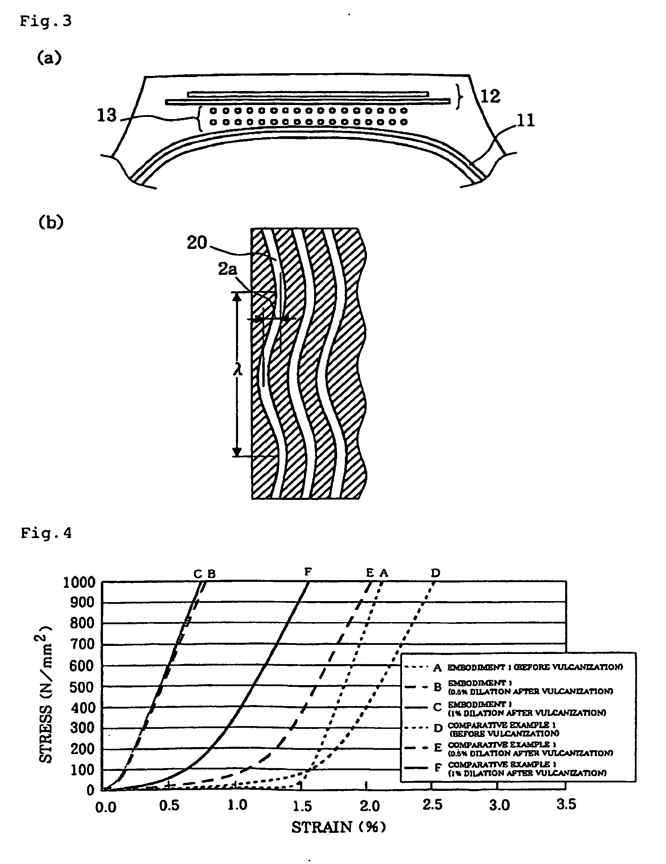

Cords 20 having a cord structure 3+9+15x0.23 conventionally used as reinforcement members in a TBR tire are arranged parallel to each other and embossed with a corrugated pattern (wavelength: λ, amplitude: 2a) as shown in plan view of Fig. 3(b). These cords 20 are then embedded in rubber, thereby forming a rubber-steel cord composite of Comparative Example 1.

(Embodiments 1 and 2 and Comparative Example 2)

Using cords having the same structure as in Comparative Example 1 as strands, five of these are twisted together and embedded in rubber, thereby forming rubber-steel cord composites of Embodiments 1 and 2 and Comparative Example 2. With regard to each composite obtained, the values for the strand diameter d, the diameter D of a circle circumscribing the cord, the twisting pitch P of the cord, and $\varepsilon_c$ are shown in Table 1 below.

Fig. 4 is a graph that shows evaluation results for the relationship between strain and stress with regard to the composites obtained in Comparative Example 1 and Embodiment 1. In the figure, the values for 0.5% expansion after vulcanization and 1% expansion after vulcanization correspond to values measured after each composite was vulcanized in a 0.5% or 1% expanded state. As a result, it is apparent from the figure that the composite in Embodiment 1 has low rigidity and good moldability before vulcanization, and, after vulcanization, has higher rigidity than the composite in Comparative Example 1 corresponding to a conventional product. Regarding the physical properties after vulcanization, the composite in Embodiment 1 appears to be less affected by expansion at the time of vulcanization.

Next, the composite formed in Comparative Example 1 was employed as reinforcement members in a radial reinforcement layer in the tire structure shown in Fig. 3(a), and the composite formed in each of Embodiments 1 and 2 and Comparative Example 2 was employed as reinforcement members in a radial reinforcement layer in the tire structure shown in Fig. 2. Four tires with a tire size of 265/60R22.5 were formed and set to rims with a rim width of 8.25 so as to be mounted on a commercial truck. Each tire was then filled with an internal pressure of 900 kPa. Subsequently, with an average load of 25480 N (2600 kgf) applied, the truck was driven for 100,000 km, 30% of which being on paved highway and 70% of which being on general paved road. Upon completion of the driving, the depth of the center groove and the depths of the shoulder grooves were measured, and the difference in abrasion loss therebetween (biased abrasion difference) was compared with respect to the brand-new state. As a result, there was a difference of 2 mm or more in the tire in Comparative Example 1, whereas there was a difference of 1 mm or less in each of the tires in Embodiments 1 and 2 and Comparative Example 2. Abrasion loss is not a problem and is satisfactory if it is 1 mm or less. These results and the evaluation results concerning the moldability are shown in Table 1 below. The evaluation results for the moldability are shown based on the following standards: ◎ indicating that there is no problem, ○ indicating that there is no problem if made highly accurate, and × indicating that the tire is not fittable in a mold and that the crown shape is defective.

[Table 1]

| | Comparative Example 1 | Embodiment 1 | Comparative Example 2 | Embodiment 2 |
|---|---|---|---|---|
| Cord Structure | 3+9+15×0.23 | 5×(3+9+15× 0.23) | 5×(3+9+15× 0.23) | 5×(3+9+15× 0.23) |
| Corrugation 2a/λ | 0.078 | - | - | - |
| Strand Diameter d (mm) | - | 1.42 | 1.42 | 1.42 |
| Cord Diameter D (mm) | - | 4.39 | 3.91 | 4.06 |
| Cord Pitch P (mm) | - | 30 | 30 | 30 |
| $\varepsilon_c$ | - | 0.015 | 0.001 | 0.005 |
| Embedded Number | 45 / 100 mm | 18 / 100 mm | 18 / 100 mm | 18 / 100 mm |
| Number of Crown Reinforcement Layers | 2 layers | 1 layer | 1 layer | 1 layer |
| Biased Abrasion Difference | 2 mm or more | 1 mm or less | 1 mm or less | 1 mm or less |
| Moldability | ◎ | ◎ | × | ○ |

As shown in Table 1 above, the tire according to each of Embodiments 1 and 2 that employs the multiple-twisted cords as reinforcement members, in which $\varepsilon_c$ defined by the aforementioned expression satisfies $\varepsilon_c \geq 0.005$, was confirmed to have excellent biased abrasion properties as well as excellent moldability.

**Claims**

1. A tire (10) comprising a reinforcement layer (13) that includes, as a reinforcement member, a rubber-steel cord composite formed by embedding in rubber a steel cord having a multiple-twist structure and having a diameter D in mm of a circle circumscribing the cord, including N strands (2)that are twisted together with a twisting pitch P of the cord in mm, wherein N may be any integer not less than 2 and not more than 8, each strand (2) having a plurality of wires (1) that are twisted together and each strand having a diameter d in mm, wherein the steel cord satisfies the following relation:

$$\varepsilon_C \geq 0.005$$

wherein is defined by the following expression:

$$\varepsilon_C = \sqrt{(-b/2 + \sqrt{(b^2/4 - c)})} - 1$$

with

$$b = -1 + \pi^2 (-4R^2 + d^2)/P^2 ,$$

$$c = \pi^2 d^2 k(4\pi^2 R^2 + P^2)/ P^4,$$

$$R = (D-d)/2,$$

and

$$k = \tan^2(\pi/2 - \pi/N),$$

wherein the reinforcement layer (13) is formed by wrapping the reinforcement member around a crown portion of the tire (10) by at least one turn.

2. The tire according to Claim 1, wherein $\varepsilon_c \geq 0.015$ is satisfied.

3. The tire according to Claim 1, wherein the N strands have a gap in at least one section therebetween.

4. A tire according to any preceding claim, comprising at least a pair of carcasses (11) serving as a framework and extending in a toroidal form between at least a pair of bead cores, and at least one layer of belt (12) extending around an outer periphery of the carcasses (11) and having a plurality of cords or filaments serving as reinforcement elements that form a slanted angle of 10˚ to 40˚ with respect to an equatorial plane of the tire,
wherein the tire is provided with at least one crown reinforcement layer (13) formed on an inner periphery side of the belt (12) which is the outer periphery of the carcasses (11), the at least one crown reinforcenent layer (13) being formed of strips of the rubber-steel cord composite as defined in any preceding claim that are wholly oriented in a circumferential direction of the tire.

5. A tire according to any preceding claim, comprising at least a pair of carcasses (11) serving as a framework and extending in a toroidal form between at least a pair of bead cores, and at least two layers of crossover belts (12) extending around an outer periphery of the carcasses (11) and having a plurality of cords or filaments serving as reinforcement elements that form a slanted angle of 10˚ to 40˚ with respect to an equatorial plane of the tire and that cross over each other between the at least two layers with the equatorial plane therebetween,
wherein the tire is provided with at least one crown reinforcement layer (13) formed on an inner periphery side of the crossover belts which is the outer periphery of the carcasses (11), the at least one crown reinforcement layer (13) being formed of strips of the rubber-steel cord composite as defined in any preceding claim that are wholly oriented in a circumferential direction of the tire.

**Patentansprüche**

1. Reifen (10), der eine Verstärkungslage (13) umfasst, die, als ein Verstärkungselement, einen Gummi-Stahlkord-Verbundstoff einschließt, der geformt ist durch das Einbetten in Gummi eines Stahlkords, der eine Mehrfach-Drillstruktur hat und einen Durchmesser D in mm eines Kreises hat, der den Kord umschreibt, einschließlich von N Strängen (2), die mit einer Drillsteigung P des Kords im mm miteinander verdrillt sind, wobei N eine beliebige ganze Zahl, nicht kleiner als 2 und nicht größer als 8, sein kann, wobei jeder Strang (2) mehrere Drähte (1) hat, die miteinander verdrillt sind, und jeder Strang einen Durchmesser d in mm hat, wobei der Stahlkord die folgende Gleichung erfüllt:

$$\varepsilon_C \geq 0,005,$$

wobei $\varepsilon_c$ definiert wird durch den folgenden Ausdruck:

$$\varepsilon_C = \sqrt{(-b/2 + \sqrt{(b^2/4 - c)})} - 1,$$

wobei

$$b = -1 + \pi^2(-4R^2 + d^2)/P^2,$$

$$c = \pi^2 d^2 k (4\pi^2 R^2 + P^2)/P^4,$$

$$R = (D - d)/2$$

und

$$k = \tan^2(\pi/2 - \pi/N),$$

wobei die Verstärkungslage (13) geformt ist durch das Wickeln des Verstärkungselementes um einen Scheitelabschnitt des Reifens (10) um wenigstens eine Runde.

2. Reifen nach Anspruch 1, wobei $\varepsilon_{c \geq}$ 0,015 erfüllt ist.

3. Reifen nach Anspruch 1, wobei die N Stränge einen Spalt in wenigstens einer Sektion zwischen denselben haben.

4. Reifen nach einem der vorhergehenden Ansprüche, der wenigstens ein Paar von Karkassen (11), die als ein Gerüst dienen und sich in einer kreisringförmigen Gestalt zwischen wenigstens einem Paar von Wulstkernen erstrecken, und wenigstens eine Lage eines Gürtels (12), der sich um einen Außenumfang der Karkassen (11) erstreckt und mehrere Kords oder Filamente hat, die als Verstärkungselemente dienen, die einen schiefen Winkel von 10˚ bis 40˚ in Bezug auf eine Äquatorialebene des Reifens bilden, umfasst,
wobei der Reifen mit wenigstens einer Scheitel-Verstärkungslage (13) versehen ist, die auf einer Innenumfangsseite des Gürtels (12) geformt ist, die der Außenumfang der Karkassen (11) ist, wobei die wenigstens eine Scheitel-Verstärkungslage (13) aus Streifen des Gummi-Stahlkord-Verbundstoffs nach einem der vorhergehenden Ansprüche geformt ist, die vollständig in einer Umfangsrichtung des Reifens ausgerichtet sind.

5. Reifen nach einem der vorhergehenden Ansprüche, der wenigstens ein Paar von Karkassen (11), die als ein Gerüst dienen und sich in einer kreisringförmigen Gestalt zwischen wenigstens einem Paar von Wulstkernen erstrecken, und wenigstens eine Lage von überkreuzten Gürteln (12), die sich um einen Außenumfang der Karkassen (11) erstrecken und mehrere Kords oder Filamente haben, die als Verstärkungselemente dienen, die einen schiefen Winkel von 10˚ bis 40˚ in Bezug auf eine Äquatorialebene des Reifens bilden und die einander zwischen den wenigstens zwei Lagen überkreuzen, wobei sich die Äquatorialebene zwischen denselben befindet, umfasst,
wobei der Reifen mit wenigstens einer Scheitel-Verstärkungslage (13) versehen ist, die auf einer Innenumfangsseite der überkreuzten Gürtel geformt ist, die der Außenumfang der Karkassen (11) ist, wobei die wenigstens eine Scheitel-Verstärkungslage (13) aus Streifen des Gummi-Stahlkord-Verbundstoffs nach einem der vorhergehenden Ansprüche geformt ist, die vollständig in einer Umfangsrichtung des Reifens ausgerichtet sind.

**Revendications**

1. Bandage pneumatique (10), comprenant une couche de renforcement (13) englobant, comme élément de renforcement, un composite de câblé en acier caoutchouté formé en noyant dans du caoutchouc un câblé en acier ayant une structure à torsions multiples et ayant un diamètre D en mm d'un cercle circonscrivant le câblé, englobant N brins (2) assemblés par torsion, avec un pas de torsion P du câblé en mm, N pouvant correspondre à un quelconque nombre entier non inférieur à 2 et non supérieur à 8, chaque brin (2) comportant plusieurs fils (1) assemblés par torsion, chaque brin ayant un diamètre d en mm, le câblé d'acier satisfaisant la relation ci-dessous :

$$\varepsilon_C \geq 0,005$$

où $\varepsilon_c$ est défini par l'expression ci-dessous :

$$\varepsilon_C = \sqrt{(-b/2 + \sqrt{(b^2/4 - c)})} - 1$$

avec

$$b = -1 + \pi^2 (-4R^2 + d^2)/P^2,$$

$$c = \pi^2 d^2 k (4\pi^2 R^2 + P^2)/P^4,$$

$$R = (D-d)/2$$

et

$$K = \tan^2 (\pi/2 - \pi/N),$$

la couche de renforcement (13) étant formée en enroulant l'élément de renforcement autour d'une partie de sommet du bandage pneumatique (10), sur au moins un tour.

**2.** Bandage pneumatique selon la revendication 1, dans lequel la relation $\varepsilon_c \geq 0,015$ est satisfaite.

**3.** Bandage pneumatique selon la revendication 1, dans lequel les N brins comportent un espace dans au moins une section entre eux.

**4.** Bandage pneumatique selon l'une quelconque des revendications précédentes, comprenant au moins une paire de carcasses (11), servant d'armature et s'étendant sous une forme toroïdale entre au moins une paire de tringles, et au moins une couche de ceinture (12), s'étendant autour d'une périphérie externe des carcasses (11) et comportant plusieurs câblés ou filaments servant d'éléments de renforcement, formant un angle d'inclinaison compris entre 10˚ et 40˚ par rapport à un plan équatorial du bandage pneumatique ;
le bandage pneumatique comportant au moins une couche de renforcement du sommet (13), formée sur un côté de la périphérie interne de la ceinture (12), constituant la périphérie externe des carcasses (11), la au moins une couche de renforcement du sommet (13) étant formée à partir de bandes du composite de câblé en acier caoutchouté, comme défini dans l'une quelconque des revendications précédentes, orientées entièrement dans une direction circonférentielle du bandage pneumatique.

**5.** Bandage pneumatique selon l'une quelconque des revendications précédentes, comprenant au moins une paire de carcasses (11), servant d'armature et s'étendant sous une forme toroïdale entre au moins une paire de tringles, et au moins deux couches de ceinture croisées (12), s'étendant autour d'une périphérie externe des carcasses (11) et comportant plusieurs câblés ou filaments servant d'éléments de renforcement, formant un angle d'inclinaison compris entre 10˚ et 40˚ par rapport à un plan équatorial du bandage pneumatique et se croisant les uns les autres entre les au moins deux couches, le plan équatorial étant situé entre eux ;
le bandage pneumatique comportant au moins une couche de renforcement du sommet (13), formée sur un côté de la périphérie interne des ceintures croisées, constituant la périphérie externe des carcasses (11), la au moins une couche de renforcement du sommet (13) étant formée à partir de bandes du composite de câblé en acier caoutchouté, comme défini dans l'une quelconque des revendications précédentes, orientées entièrement dans une direction circonférentielle du bandage pneumatique.

Fig.1

Fig.2

Fig.3

(a)

(b)

Fig.4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2208101 B

- US 3996020 A